# EUROPEAN PATENT APPLICATION

(11) **EP 4 030 555 A1**
(43) Date of publication of application: **20.07.2022**
(21) Application number: 20863289.3
(22) Date of filing: 01.06.2020
(51) Int. Cl.: H01P 1/22, H01P 5/12, H01Q 21/06

(54) **ANTENNA DEVICE**

(30) Priority: 10.09.2019 JP 2019164135
(71) Applicant: Sony Group Corporation, Tokyo 108-0075 (JP)
(72) Inventor: TAKEDA, Takahiro, Tokyo 108-0075 (JP); KAWASAKI, Kenichi, Tokyo 108-0075 (JP); MIHOTA, Norihito, Tokyo 108-0075 (JP)
(74) Representative: Witte, Weller & Partner Patentanwälte mbB
(86) International application number: PCT/JP2020/021520
(87) International publication number: WO 2021/049102

(57) **Abstract**

In an antenna device having a plurality of antenna elements, a tilt of directivity due to a frequency is suppressed, and a side lobe level is reduced.

A plurality of first antenna elements is fed in parallel from a feed point. A plurality of second antenna elements is fed in series from any of the plurality of first antenna elements. A distributor distributes feed power from the feed point to the plurality of first antenna elements in parallel according to a ratio of feed power to be fed to the pluralities of first and second antenna elements.

## Description

### TECHNICAL FIELD

The present technology relates to an antenna device. Specifically, the present invention relates to an antenna device having a plurality of antenna elements.

### BACKGROUND ART

Conventionally, an antenna device in which a plurality of antenna elements is arranged has been known. The antenna device having such a structure is suitable for high-frequency communication with millimeter waves or the like, and is employed as an in-vehicle antenna, for example. In a series-fed antenna such as a comb-line antenna, which is often used for a millimeter wave radar, there is a problem that a tilt of directivity due to a frequency occurs. On the other hand, in a parallel-fed antenna, the tilt of directivity hardly occurs, but it is difficult to prepare a power divider having a large power ratio for taper power feeding, and thus there is a problem that it is difficult to reduce a side lobe level. On the other hand, for example, an antenna device for obtaining a desired power distribution by combining series feeding and parallel feeding has been proposed (see, for example, Patent Document 1).

### CITATION LIST

### PATENT DOCUMENT

Patent Document 1: Japanese Patent Application Laid-Open No. 08-181537

### SUMMARY OF THE INVENTION

### PROBLEMS TO BE SOLVED BY THE INVENTION

In the above-described conventional technology, rectangular patch elements are arranged in an array, power is fed in series by a pair of main feed lines, and power is fed in parallel by branch lines connected in a direction perpendicular to the main feed lines. However, in this conventional technology, the main feed line that feeds power in series is long, and it is not possible to suppress the tilt of the directivity due to a frequency.

The present technology has been made in view of such a situation, and has an object to suppress a tilt of directivity due to a frequency and to reduce a side lobe level.

### SOLUTIONS TO PROBLEMS

The present technology has been made to solve the above-described problems, and a first aspect thereof is an antenna device including a plurality of first antenna elements fed in parallel from a feed point, a plurality of second antenna elements fed in series from any of the plurality of first antenna elements, and a distributor that distributes feed power from the feed point to the plurality of first antenna elements in parallel according to a ratio of feed power to be fed to the pluralities of first and second antenna elements. Thus, there is an operation of adjusting the ratio of feed power to a desired ratio by combining parallel feeding and series feeding, so as to achieve both suppression of a tilt of directivity and reduction of a side lobe level.

Furthermore, in the first aspect, the plurality of first antenna elements and the plurality of second antenna elements may be fed in phases different from each other. For example, power may be fed in phases different from each other by 180 degrees. Furthermore, the plurality of first antenna elements and the plurality of second antenna elements may be fed in the same phase.

Furthermore, in the first aspect, the plurality of second antenna elements may include an antenna element further fed in series to an antenna element fed in series from any of the plurality of first antenna elements. Thus, there is an operation of performing adjustment so as to obtain a desired ratio of feed power.

Furthermore, in the first aspect, the plurality of second antenna elements may be arranged on an outside of the distributor with respect to the feed point, or may be arranged on an inside of the distributor with respect to the feed point. Thus, there is an operation of performing adjustment so as to obtain a desired ratio of feed power.

Furthermore, in the first aspect, the plurality of first antenna elements may feed power to the plurality of second antenna elements via a side where power is fed from the distributor, or may feed power to the plurality of second antenna elements via a side facing or a side orthogonal to a side where power is fed from the distributor.

Furthermore, in the first aspect, the plurality of first antenna elements may feed power to the plurality of second antenna elements via electromagnetic field coupling.

Furthermore, in the first aspect, the antenna device may be an array antenna in which a plurality of linear antennas including the pluralities of first and second antenna elements and the distributor is arranged. In this case, the plurality of linear antennas may be arranged at a pitch equal to or less than half a wavelength of a corresponding frequency. Furthermore, power may be fed between the linear antennas at different feed power ratios.

Furthermore, in the first aspect, the distributor may be an unequal power divider that distributes feed power from the feed point by a feed line width according to the ratio of feed power to be fed to the pluralities of first and second antenna elements.

Furthermore, in the first aspect, the distributor may be a variable power divider that distributes feed power from the feed point by current control or voltage control according to the ratio of feed power to be fed to the pluralities of first and second antenna elements. Furthermore, the distributor may include a power divider that distributes feed power from the feed point, and a variable attenuator that attenuates at least one portion of the feed power distributed by the power divider by current control or voltage control according to the ratio of feed power to be fed to the pluralities of first and second antenna elements.

### BRIEF DESCRIPTION OF DRAWINGS

Fig. 1 is a diagram illustrating an example of attachment of an antenna device 20 to a vehicle 10 according to an embodiment of the present technology.
Fig. 2 is a diagram illustrating a configuration example of an antenna device 20 according to the embodiment of the present technology.
Fig. 3 is a diagram illustrating a numerical example of the antenna device 20 according to the embodiment of the present technology.
Fig. 4 is a diagram illustrating directivity characteristics of the numerical example of the antenna device 20 according to the embodiment of the present technology.
Fig. 5 is a diagram illustrating a configuration example of an antenna device 20 in a first modification example of the embodiment of the present technology.
Fig. 6 is a diagram illustrating a configuration example of an antenna device 20 in a second modification example of the embodiment of the present technology.
Fig. 7 is a diagram illustrating a configuration example of an antenna device 20 in a third modification example of the embodiment of the present technology.
Fig. 8 is a diagram illustrating a configuration example of an antenna device 20 in a fourth modification example of the embodiment of the present technology.
Fig. 9 is a diagram illustrating a configuration example of an antenna device 20 in a fifth modification example of the embodiment of the present technology.
Fig. 10 is a diagram illustrating a configuration example of an antenna device 20 in a sixth modification example of the embodiment of the present technology.
Fig. 11 is a diagram illustrating a configuration example of an antenna device 20 in a seventh modification example of the embodiment of the present technology.
Fig. 12 is a diagram illustrating a configuration example of an antenna device 20 in an eighth modification example of the embodiment of the present technology.
Fig. 13 is a diagram illustrating a configuration example of an antenna device 20 in a ninth modification example of the embodiment of the present technology.
Fig. 14 is a diagram illustrating a configuration example of an antenna device 20 in a tenth modification example of the embodiment of the present technology.
Fig. 15 is a diagram illustrating a configuration example of an antenna device 20 in an eleventh modification example of the embodiment of the present technology.

### MODE FOR CARRYING OUT THE INVENTION

Hereinafter, modes for carrying out the present technology (hereinafter referred to as embodiments) will be described. The description will be given in the following order.
1. Embodiment
2. Modification examples

### <1. Embodiment>

### [Millimeter wave radar]

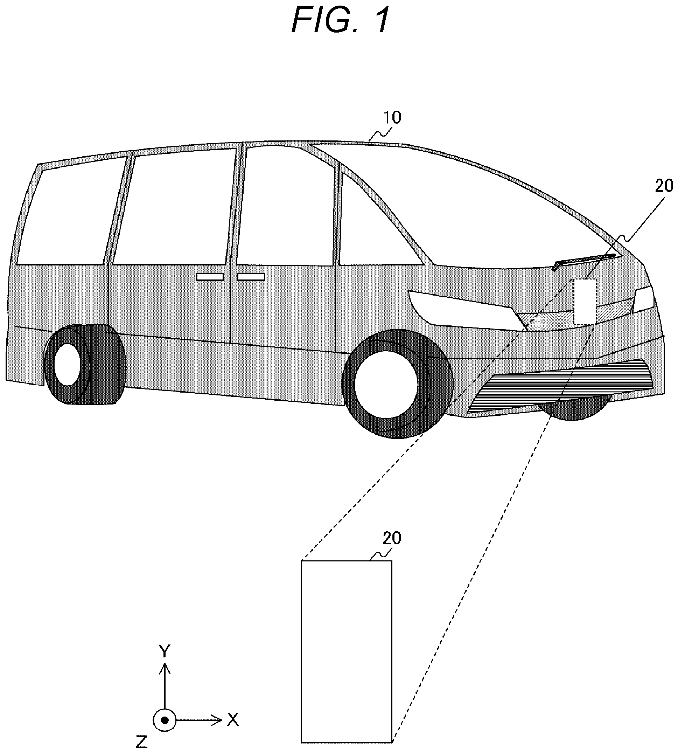

Fig. 1 is a diagram illustrating an example of attachment of an antenna device 20 according to an embodiment of the present technology to a vehicle 10.

Here, an example is illustrated in which an in-vehicle millimeter wave radar is assumed, and the antenna device 20 of the radar is attached to a back of a front grille of the vehicle 10. A traveling direction is represented by a Z axis, a horizontal direction is represented by an X axis, and a vertical direction is represented by a Y axis.

The millimeter wave radar is required to cover a broadband frequency band such as 76 GHz to 81 GHz, for example. This is to improve a distance resolution by the millimeter wave radar. That is, this makes it possible to accurately separate objects by accurately measuring a distance of an object to be detected by sweeping a broadband pulse.

At this time, in the antenna device, in a case where power is fed in series in the vertical direction as in the related art, an event in which a peak (main beam) of directivity tilts up and down with respect to the vertical direction accompanying a change in frequency may occur. This is because the wavelength also changes due to a change in frequency, and thus the length of a feed line from a feed point to each patch element deviates.

On the other hand, in a case of parallel feeding, the tilt is less likely to occur, but it is difficult to reduce side lobes on a side of the main beam. This is because there is a limit to adjustment of a distribution ratio of feed power in the parallel feeding. That is, in order to adjust the distribution ratio, the distribution ratio is generally adjusted by line widths of the feed lines, but in this case, it is difficult to provide a large difference in the line widths.

Accordingly, in this embodiment, by combining parallel feeding and series feeding as described below, both suppression of the tilt of directivity by the frequency and reduction of the side lobe level are achieved.

### [Antenna device]

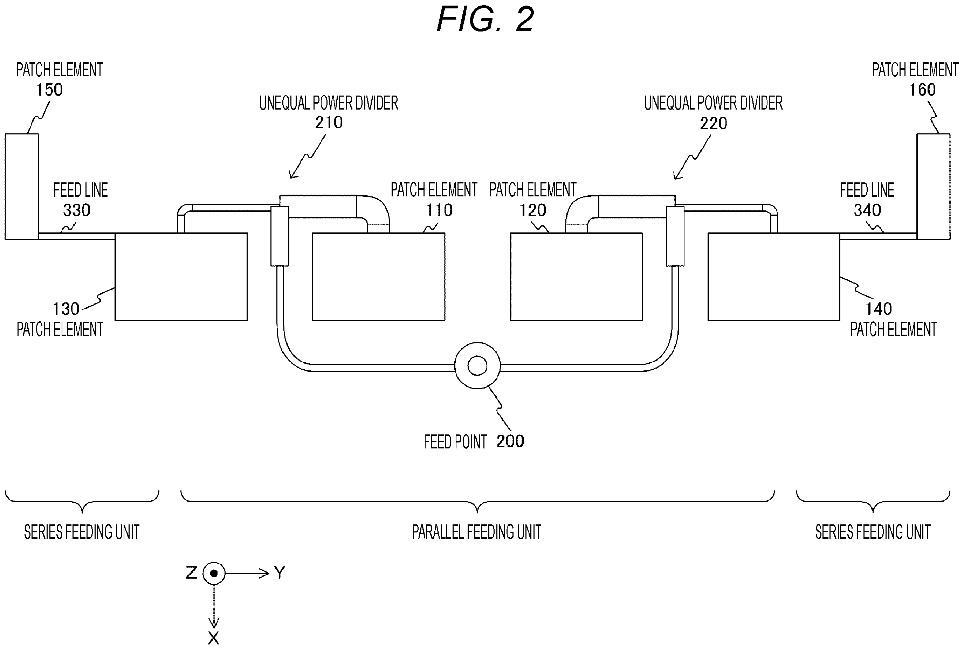

Fig. 2 is a diagram illustrating a configuration example of the antenna device 20 according to the embodiment of the present technology.

The antenna device 20 includes six patch elements 110, 120, 130, 140, 150, and 160. Four patch elements 110, 120, 130 and 140 among them are connected to be fed in parallel by unequal power dividers 210 and 220 from a feed point 200 to constitute a parallel-fed microstrip antenna array. These are illustrated as a parallel feeding unit in the drawings. Note that patch elements 110, 120, 130, and 140 are examples of a first antenna element described in the claims. Furthermore, the unequal power dividers 210 and 220 are examples of a distributor described in the claims.

Furthermore, to the patch element 130 on an outside of the parallel-fed microstrip antenna array, the patch element 150 is connected via a feed line 330 to be fed in series. Similarly, to the patch element 140, the patch element 160 is connected via the feed line 340 to be fed in series. These are illustrated as a series feeding unit in the drawings. That is, the patch elements 150 and 160 are positioned on outsides of the unequal power dividers 210 and 220 with respect to the feed point 200. Note that the patch elements 150 and 160 are examples of a second antenna element described in the claims.

With such a structure, feed power from the feed point 200 can be fed in parallel by the unequal power dividers 210 and 220 and further fed in series by the feed lines 330 and 340. Thus, distribution of the feed power can be performed so as to reduce side lobes while suppressing the distribution ratio of the feed power at the unequal power dividers 210 and 220. Furthermore, by combining with the parallel feeding unit, the length of the series feeding unit can be suppressed to be short, and the tilt of directivity due to the frequency can be suppressed.

### [Numerical examples]

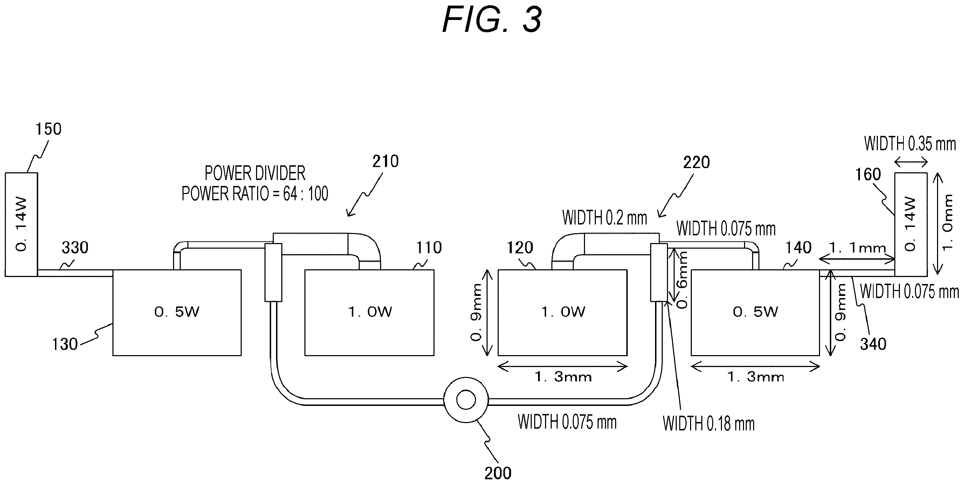

Fig. 3 is a diagram illustrating a numerical example of the antenna device 20 according to the embodiment of the present technology. In this numerical example, a millimeter wave band of 76 GHz to 81 GHz is assumed as a used frequency band.

In this example, it is assumed that when the patch elements 110 and 120 have the feed power of 1.0 W, the patch elements 130 and 140 have the feed power of 0.5 W, and the patch elements 150 and 160 have the feed power of 0.14 W. In this manner, the power ratio of feeding is increased on the inside and decreased on the outside, thereby configuring the antenna device 20 having a wide band, a low side lobe level, and a small frequency variation.

The patch elements 110, 120, 130, and 140 each have a size of 1.3 mm in width and 0.9 mm in length. Furthermore, the patch elements 150 and 160 each have a size of 0.35 mm in width and 1.0 mm in length. The vertical lengths of the patch elements 110, 120, 130, 140, 150, and 160 are set on the basis of a half length of the wavelength λ of the used frequency. Furthermore, the patch elements 150 and 160 fed in series change the power ratio by adjusting the length of a lateral width. In other words, by adjusting the lengths of the lateral widths of the patch elements 150 and 160, it is possible to design the antenna device 20 having a power distribution that reduces the side lobes.

Each of the power ratios of the unequal power dividers 210 and 220 is 64 : 100 from the ratio of feed power of the six patch elements 110, 120, 130, 140, 150 and 160 described above. A line width of the feed line from the feed point 200 to the unequal power dividers 210 and 220 is 0.075 mm. Each of the unequal power dividers 210 and 220 distributes the feed power received at an input that is 0.6 mm in length and 0.18 mm in width to 0.2 mm in width and 0.075 mm in width. By adjusting the impedance with this line width ratio, the power ratio of 64 : 100 is obtained.

Furthermore, feeding phases of the feed lines 330 and 340 fed in series can be adjusted by lengths. In this example, power is fed with a phase shift of 180 degrees by setting on the basis of a half length of the wavelength λ of the used frequency. That is, the patch elements 130 and 140 are fed from above and the patch elements 150 and 160 are fed from below, and because of being fed from opposite directions to each other, by adjusting the feeding phases to 180 degrees, the patch elements are excited in the same phase and intensified with each other.

Note that the vertical lengths of the patch elements 110, 120, 130, 140, 150, and 160 and the lengths of the feed lines 330 and 340 are set on the basis of a half length of the wavelength λ of the used frequency, but these lengths are affected by various factors. For example, there is a possibility of being affected by a dielectric constant of a substrate material of the antenna device, an effective dielectric constant as a line, a used frequency, and the like. Specifically, in a case of a thin line, the effective dielectric constant decreases, and thus the length is set longer than the original length, and in a case of a thick line, the length is set shorter than the original length.

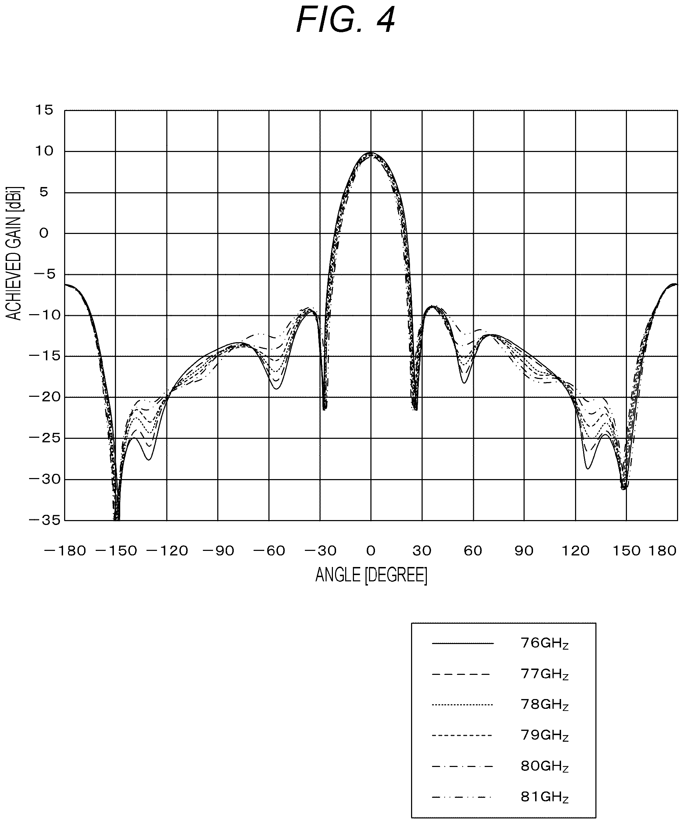

Fig. 4 is a diagram illustrating directivity characteristics of the numerical example of the antenna device 20 according to the embodiment of the present technology.

This directivity characteristic indicates a result of simulation under the conditions of the numerical examples described above. From this directional characteristic, it can be seen that in a case where the frequency is changed from 76 GHz to 81 GHz, no tilt of the directivity has occurred due to the frequency, and the side lobe level is also appropriately suppressed.

As described above, in the embodiment of the present technology, the patch elements 150 and 160 are further connected to outsides of the patch elements 110, 120, 130, and 140 fed in parallel, to feed power in series thereto. Thus, it is possible to achieve both suppression of the tilt of the directivity by the frequency and reduction of the side lobe level. That is, it is possible to achieve a small antenna that is wideband, has a high gain, a low tilt, and a low side lobe.

### <2. Modification examples>

### [First modification example]

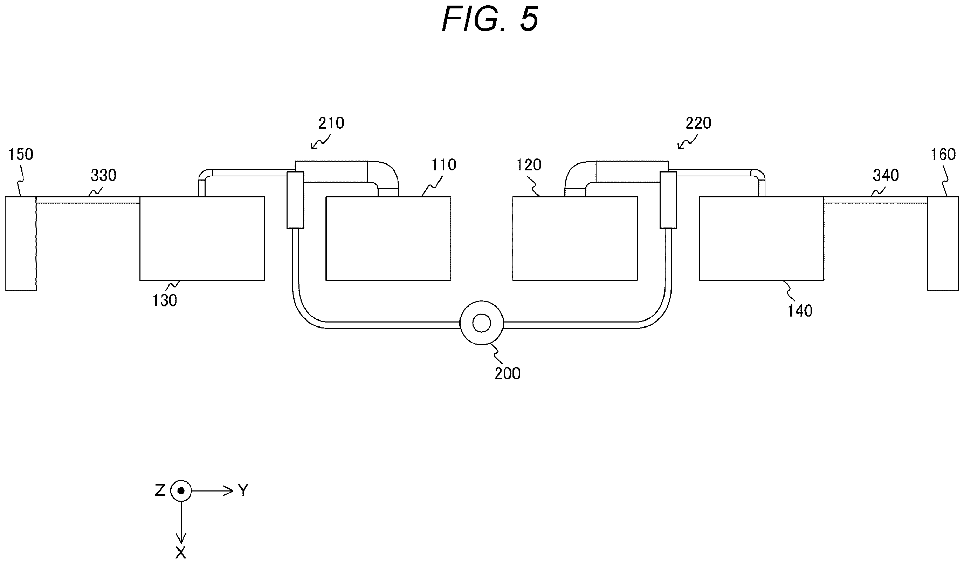

Fig. 5 is a diagram illustrating a configuration example of an antenna device 20 in a first modification example of the embodiment of the present technology.

In the antenna device 20 in the first modification example, when power is fed in series from the patch elements 130 and 140 to the patch elements 150 and 160 via the feed lines 330 and 340, the direction of feeding is opposite to that of the above-described embodiment. That is, in the above-described embodiment, power is fed from lower sides of the patch elements 150 and 160, but in the first modification example, power is fed from upper sides of the patch elements 150 and 160.

Due to this difference in the feeding direction, in order to excite the patch elements 130 and 140 and the patch elements 150 and 160 in the same phase, it is necessary to set the feeding phase of both to 360 degrees. Therefore, the lengths of the feed lines 330 and 340 are longer than those of the above-described embodiment. Furthermore, the tilt of the directivity is also more likely to occur.

According to the first modification example, the length in the X-axis direction can be further shortened. Therefore, it is possible to shorten the pitch in a case where the array arrangement is performed by further arranging a plurality of antennas in the diagram.

### [Second modification example]

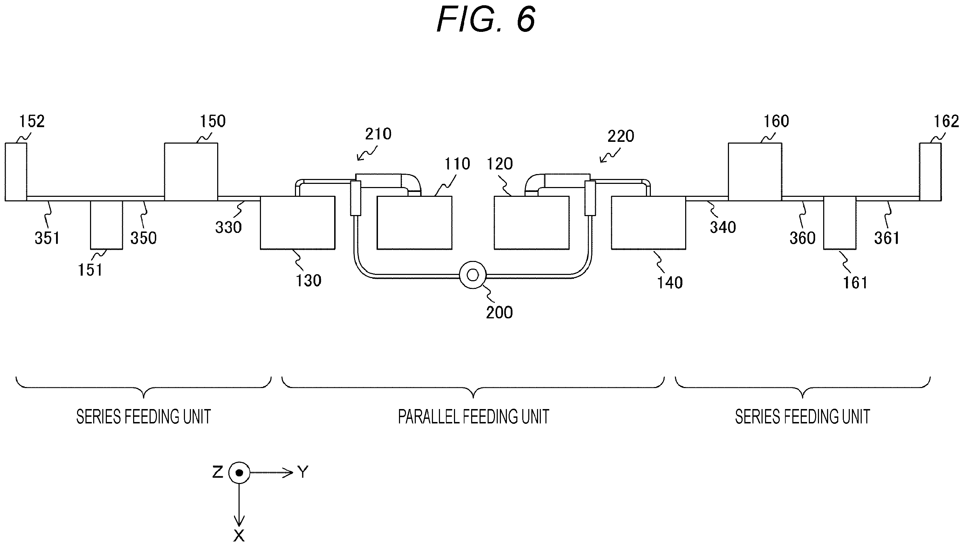

Fig. 6 is a diagram illustrating a configuration example of an antenna device 20 in a second modification example of the embodiment of the present technology.

In the antenna device 20 in the second modification example, a plurality of patch elements 150, 151, and 152 is further connected to an outside of the patch element 130 that is fed in parallel, and a plurality of patch elements 160, 161, and 162 is further connected to an outside of the patch element 140, to feed power in series to each of the pluralities of patch elements. Thus, the gain of the antenna device 20 can be increased. Increasing the gain of the antenna device 20 is effective in that radio waves can be radiated far particularly in a case of an in-vehicle antenna. Note that the patch elements 151, 152, 161, and 162 are examples of a second antenna element described in the claims.

However, in this case, the tilt of the directivity caused by the series feeding easily occurs. Furthermore, in the feed power ratio distributed in the unequal power dividers 210 and 220, the feed power on the outside is larger than that in the above-described embodiment.

### [Third modification example]

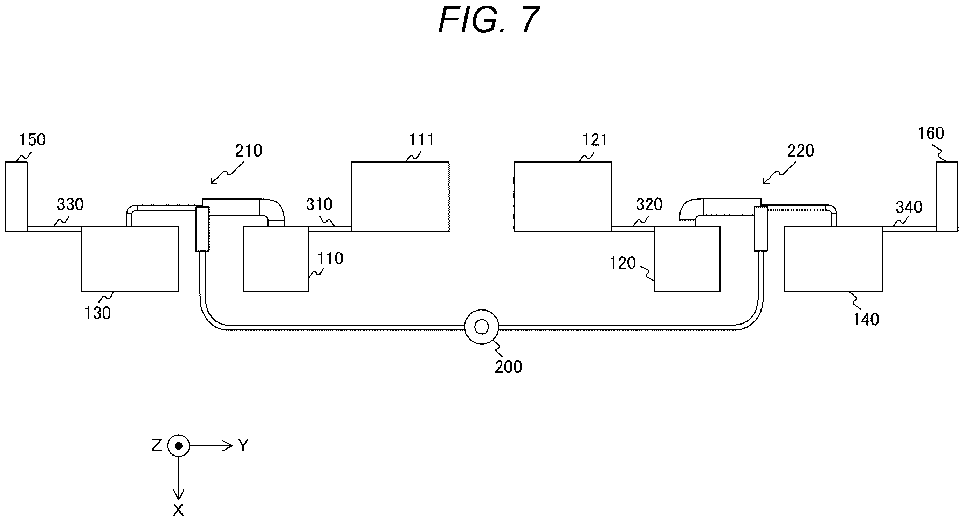

Fig. 7 is a diagram illustrating a configuration example of an antenna device 20 in a third modification example of the embodiment of the present technology.

In the antenna device 20 in the third modification example, a patch element 111 is further connected via a feed line 310 to an inside of the patch element 110 fed in parallel, and a patch element 121 is further connected via a feed line 320 to an inside of the patch element 120 fed in parallel, to feed power in series to each of the connected patch elements. That is, in this third modification example, the patch elements 150 and 160 are arranged inside the unequal power dividers 210 and 220 with respect to the feed point 200. Thus, the gain of the antenna device 20 can be increased. Note that the patch elements 111 and 121 are examples of a first antenna element described in the claims.

However, in this case, the tilt of the directivity caused by the series feeding easily occurs. Furthermore, in the feed power ratio distributed in the unequal power dividers 210 and 220, the feed power on the inside is larger than that in the above-described embodiment.

### [Fourth modification example]

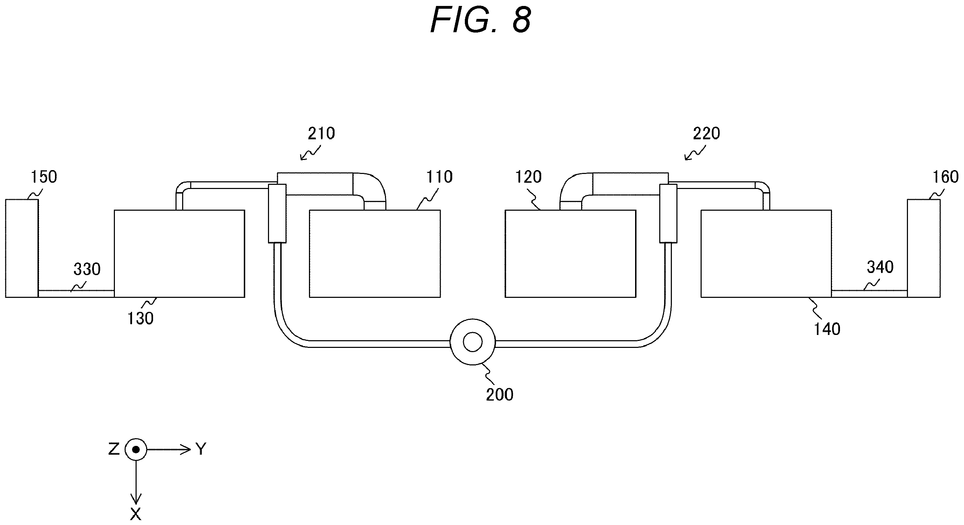

Fig. 8 is a diagram illustrating a configuration example of an antenna device 20 in a fourth modification example of the embodiment of the present technology.

In the antenna device 20 in the fourth modification example, sides where the patch elements 130 and 140 are fed in parallel and sides where the feed lines 330 and 340 that feed power in series to the patch elements 150 and 160 are connected face each other. In the above-described embodiment, the sides where the patch elements 130 and 140 are fed in parallel and the side where the feed lines 330 and 340 are connected in parallel are the same, and the patch elements 150 and 160 are fed in series via the sides where the patch elements 130 and 140 are fed in parallel. On the other hand, in the fourth modification example, in the patch elements 150 and 160, it is possible to feed power in series to the patch elements 150 and 160 via the sides facing the sides where power is fed in parallel.

### [Fifth modification example]

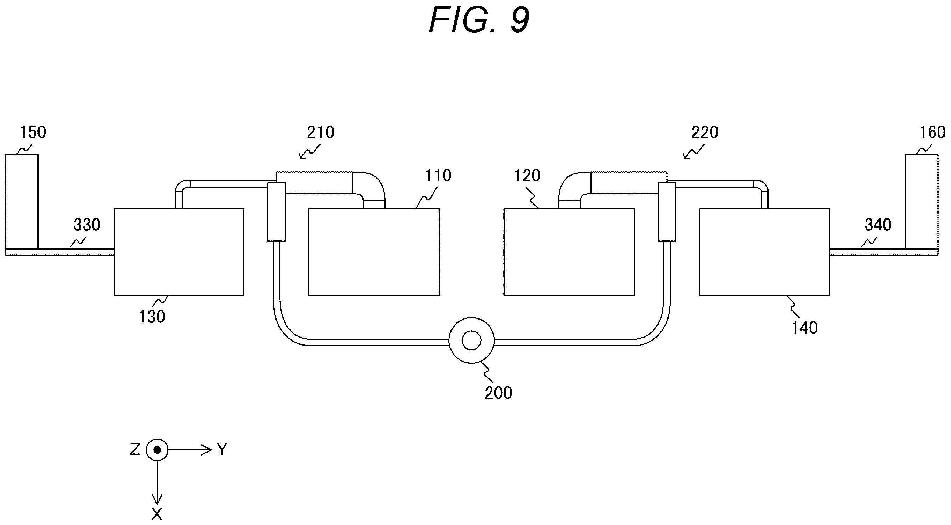

Fig. 9 is a diagram illustrating a configuration example of an antenna device 20 in a fifth modification example of the embodiment of the present technology.

In the antenna device 20 in the fifth modification example, sides where the patch elements 130 and 140 are fed in parallel is orthogonal to sides where feed lines 330 and 340 that feed power in series to the patch elements 150 and 160 are connected. In the above-described embodiment, the sides where the patch elements 130 and 140 are fed in parallel and the side where the feed lines 330 and 340 are connected in parallel are the same, and the patch elements 150 and 160 are fed in series via the sides where the patch elements 130 and 140 are fed in parallel. On the other hand, in the fifth modification example, in the patch elements 150 and 160, power can be fed in series to the patch elements 150 and 160 via the side orthogonal to the side fed in parallel.

### [Sixth modification example]

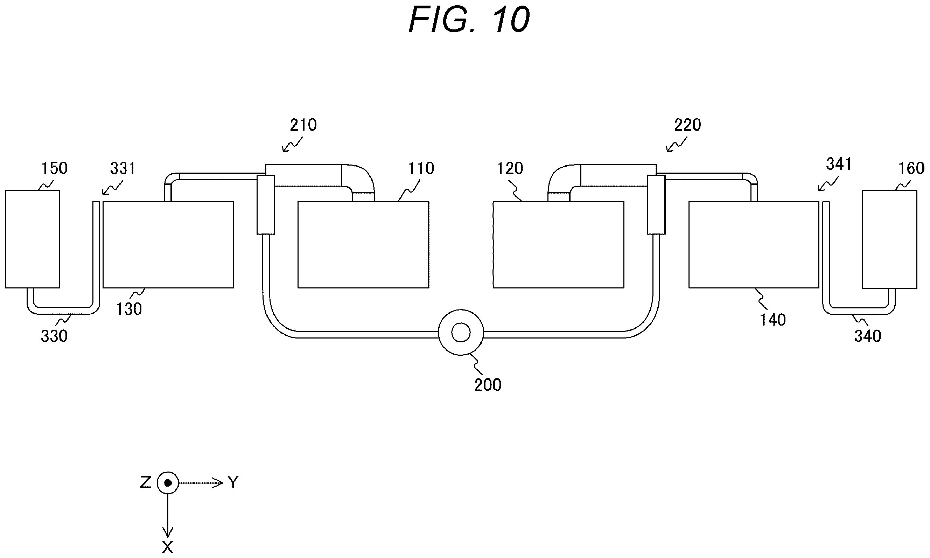

Fig. 10 is a diagram illustrating a configuration example of an antenna device 20 in a sixth modification example of the embodiment of the present technology.

The antenna device 20 in the sixth modification example uses electromagnetic field coupling when the patch elements 150 and 160 are fed in series from the patch elements 130 and 140 that are fed in parallel. That is, connection between the patch element 130 and the feed line 330 and connection between the patch element 140 and the feed line 340 can be performed via electromagnetic field couplings 331 and 341, respectively.

As in the fourth to sixth modification examples, restrictions of the antenna arrangement can be improved by changing the feeding directions and feeding positions of the series feeding elements and enabling feeding by electromagnetic field coupling.

### [Seventh modification example]

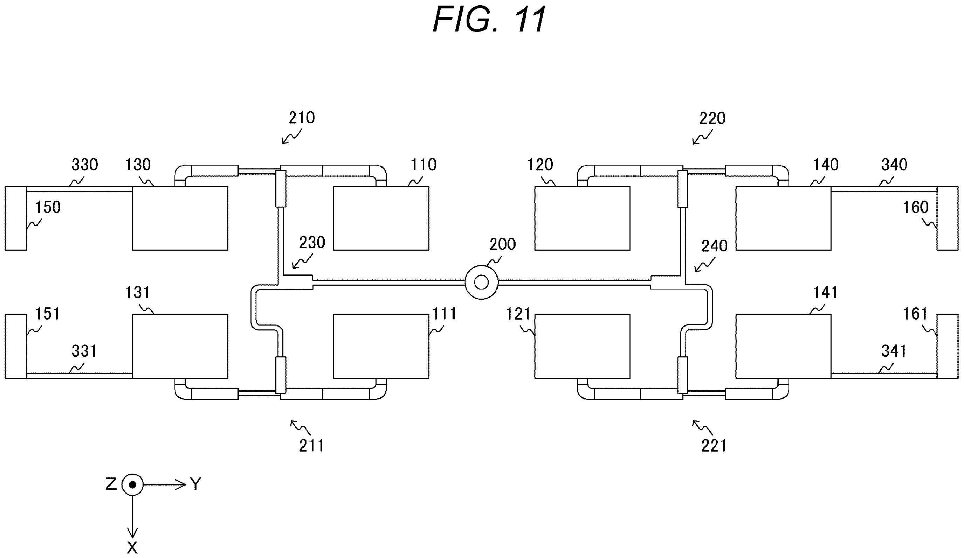

Fig. 11 is a diagram illustrating a configuration example of an antenna device 20 in a seventh modification example of the embodiment of the present technology.

The antenna device 20 in the seventh modification example is obtained by arranging two antenna devices 20 of the first modification example of the above-described embodiment. Here, the feed point 200 is shared and the feed power is distributed by the power dividers 230 and 240. The power dividers 230 and 240 in this case are equal power dividers with a feed power ratio of 1 : 1.

In the embodiment of the present technology and the modification examples thereof, since the patch elements 110, 120, 130, 140, 150, and 160 are arranged in the Y-axis direction, the length in the X-axis direction can be shortened. Therefore, in a case where a plurality of the antenna devices is arranged in the X-axis direction, the arrangement pitch can be shortened. In a case where the radiation angle of the antenna is assumed to be ±90 degrees, it is necessary to arrange the antennas in the X-axis direction at a pitch equal to or less than half the wavelength λ of the used frequency in order to suppress generation of grating lobes, and the antenna device 20 in the seventh modification example can satisfy this condition.

### [Eighth modification example]

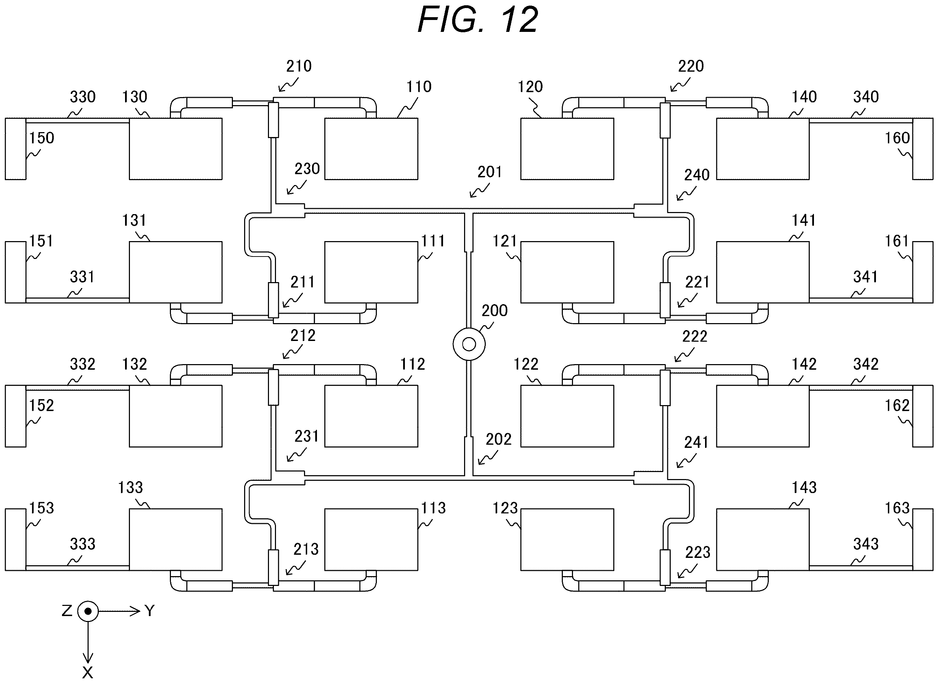

Fig. 12 is a diagram illustrating a configuration example of an antenna device 20 in an eighth modification example of the embodiment of the present technology.

The antenna device 20 in the eighth modification example is obtained by arranging four antenna devices 20 of the first modification example of the above-described embodiment. Here, the feed point 200 is shared and the feed power is distributed by the power dividers 201, 202, 230, 231, 240 and 241. These power dividers 201, 202, 230, 231, 240 and 241 are equal power dividers with a feed power ratio of 1 : 1.

### [Ninth modification example]

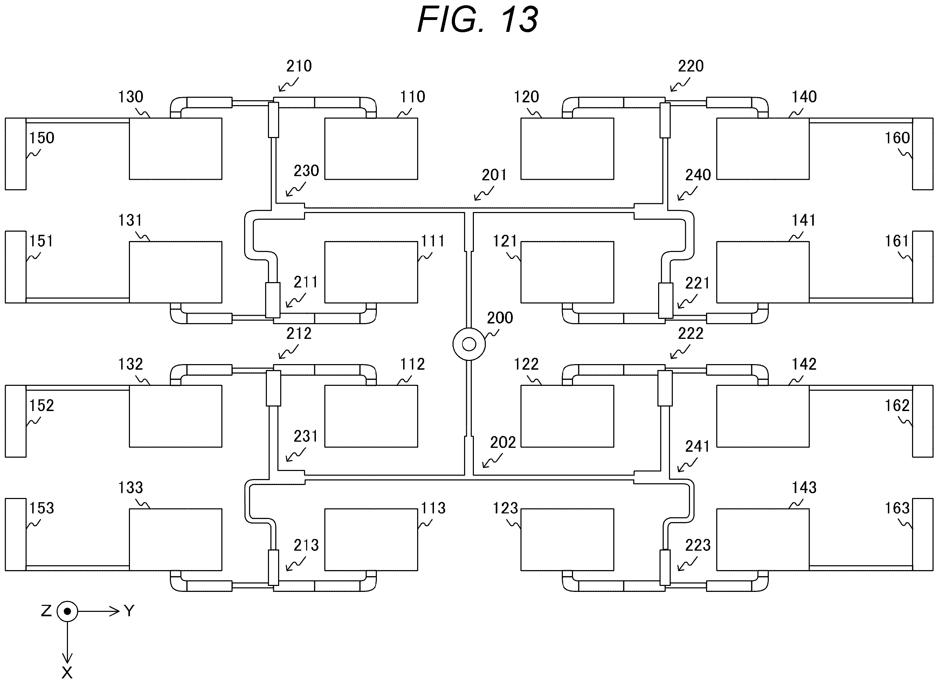

Fig. 13 is a diagram illustrating a configuration example of an antenna device 20 in a ninth modification example of the embodiment of the present technology.

The antenna device 20 in the ninth modification example is obtained by changing the power dividers 230, 231, 240, and 241 in the eighth modification example of the above-described embodiment to unequal power dividers. This is intended to adjust the feed power ratio in order to avoid an influence on the side lobe in the frequency characteristics due to a plurality of arrangements in the X-axis direction.

### [Tenth modification example]

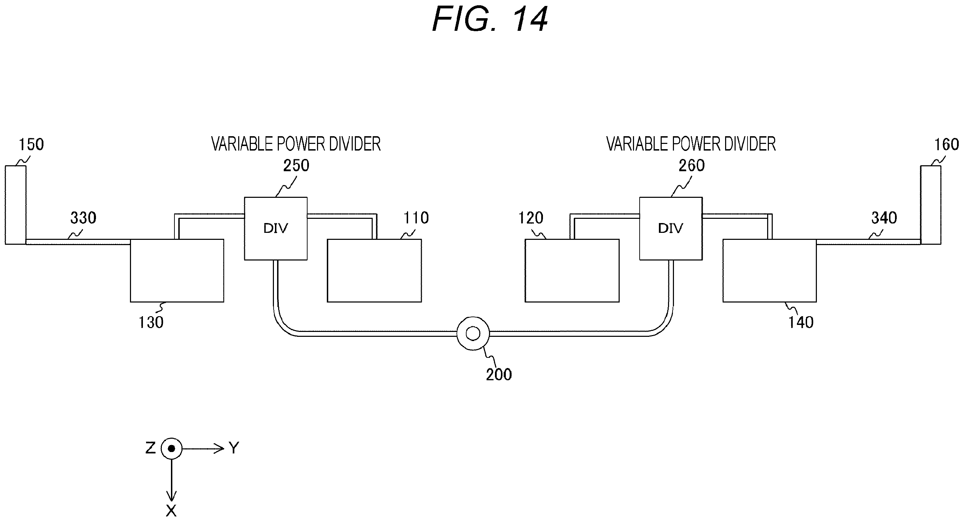

Fig. 14 is a diagram illustrating a configuration example of an antenna device 20 in a tenth modification example of the embodiment of the present technology.

The antenna device 20 in the tenth modification example includes variable power dividers 250 and 260 as active circuits instead of the unequal power dividers 210 and 220 in the above-described embodiment. The variable power dividers 250 and 260 distribute the feed power from the feed point 200 by current control or voltage control according to the ratio of feed power to be fed. By using the variable power dividers 250 and 260, it is possible to adjust the feed power ratio so as to have directivity with an optimum side lobe level and the like at each frequency. Note that the variable power dividers 250 and 260 are examples of a distributor described in the claims.

### [Eleventh modification example]

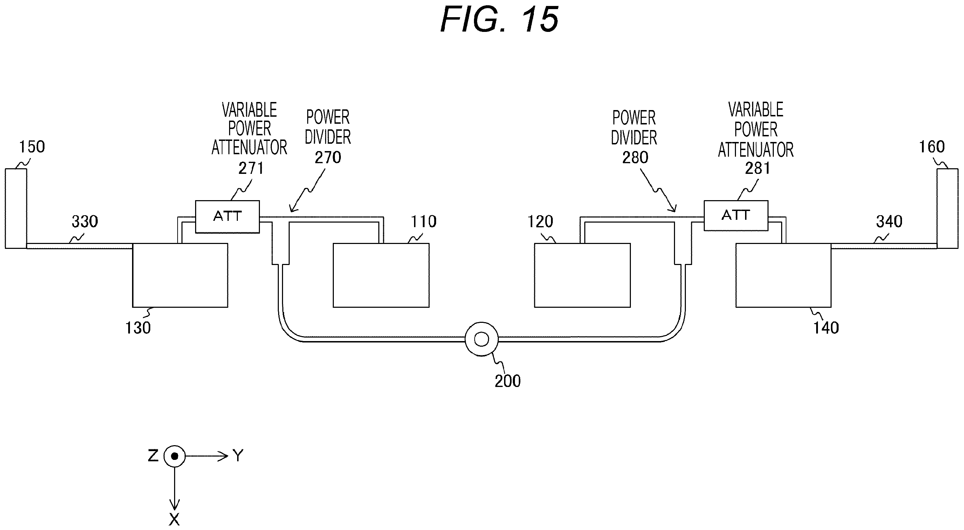

Fig. 15 is a diagram illustrating a configuration example of an antenna device 20 in an eleventh modification example of the embodiment of the present technology.

The antenna device 20 in the eleventh modification example includes power dividers 270 and 280 and variable attenuators 271 and 281 as active circuits instead of the unequal power dividers 210 and 220 in the above-described embodiment. The variable attenuators 271 and 281 attenuate the feed power distributed by the power dividers 270 and 280 by current control or voltage control according to the ratio of the feed power to be fed. By using the variable attenuators 271 and 281, it is possible to adjust the feed power ratio so as to have directivity with an optimum side lobe level and the like at each frequency, as in the above-described tenth modification example. Note that the power dividers 270 and 280 and the variable attenuators 271 and 281 are examples of a distributor described in the claims.

Note that the embodiment described above illustrates an example for embodying the present technology, and matters in the embodiment and matters specifying the invention in the claims have respective correspondence relationships. Similarly, the matters specifying the invention in the claims and matters having the same names in the embodiments of the present technology have respective correspondence relationships. However, the present technology is not limited to the embodiment and can be embodied by making various modifications to the embodiment without departing from the gist thereof.

Note that effects described in the present description are merely examples and are not limited, and other effects may be provided.

Note that the present technology can have configurations as follows.
(1) An antenna device including:
   a plurality of first antenna elements fed in parallel from a feed point;
   a plurality of second antenna elements fed in series from any of the plurality of first antenna elements; and
   a distributor that distributes feed power from the feed point to the plurality of first antenna elements in parallel according to a ratio of feed power to be fed to the pluralities of first and second antenna elements.
(2) The antenna device according to (1) above, in which
   the plurality of first antenna elements and the plurality of second antenna elements are fed in phases different from each other.
(3) The antenna device according to (2) above, in which
   the plurality of first antenna elements and the plurality of second antenna elements are fed in phases different from each other by 180 degrees.
(4) The antenna device according to (1) above, in which
   the plurality of first antenna elements and the plurality of second antenna elements are fed in the same phase.
(5) The antenna device according to any one of (1) to (4) above, in which
   the plurality of second antenna elements includes an antenna element further fed in series to an antenna element fed in series from any of the plurality of first antenna elements.
(6) The antenna device according to any one of (1) to (5) above, in which
   the plurality of second antenna elements is arranged on an outside of the distributor with respect to the feed point.
(7) The antenna device according to any one of (1) to (5) above, in which
   the plurality of second antenna elements is arranged on an inside of the distributor with respect to the feed point.
(8) The antenna device according to any one of (1) to (7) above, in which
   the plurality of first antenna elements feeds power to the plurality of second antenna elements via a side where power is fed from the distributor.
(9) The antenna device according to any one of (1) to (7) above, in which
   the plurality of first antenna elements feeds power to the plurality of second antenna elements via a side facing a side where power is fed from the distributor.
(10) The antenna device according to any one of (1) to (7) above, in which
   the plurality of first antenna elements feeds power to the plurality of second antenna elements via a side orthogonal to a side where power is fed from the distributor.
(11) The antenna device according to any one of (1) to (10) above, in which
   the plurality of first antenna elements feeds power to the plurality of second antenna elements via electromagnetic field coupling.
(12) The antenna device according to any one of (1) to (11) above, in which
   the antenna device is an array antenna in which a plurality of linear antennas including the pluralities of first and second antenna elements and the distributor is arranged.
(13) The antenna device according to (12) above, in which
   the plurality of linear antennas is arranged at a pitch equal to or less than half a wavelength of a corresponding frequency.
(14) The antenna device according to (12) above, in which power is fed between the linear antennas at different feed power ratios.
(15) The antenna device according to any one of (1) to (14) above, in which
   the distributor is an unequal power divider that distributes feed power from the feed point by a feed line width according to the ratio of feed power to be fed to the pluralities of first and second antenna elements.
(16) The antenna device according to any one of (1) to (14) above, in which
   the distributor is a variable power divider that distributes feed power from the feed point by current control or voltage control according to the ratio of feed power to be fed to the pluralities of first and second antenna elements.
(17) The antenna device according to any one of (1) to (14) above, in which the distributor includes a power divider that distributes feed power from the feed point, and a variable attenuator that attenuates at least one portion of the feed power distributed by the power divider by current control or voltage control according to the ratio of feed power to be fed to the pluralities of first and second antenna elements.

### REFERENCE SIGNS LIST

10 Vehicle
20 Antenna device
110, 111, 120, 121, 130, 140, 150, 151, 152, 160, 161, 162 Patch element
200 Feed point
201, 202, 230, 231, 240, 241, 270, 280 Power divider
210, 211, 212, 213, 220, 221, 222, 223 Unequal power divider
250, 260 Variable power divider
271, 281 Variable attenuator
310, 320, 330, 340, 350, 351, 360, 361 Feed line
331, 341 Electromagnetic field coupling

## Claims

1. An antenna device comprising:
a plurality of first antenna elements fed in parallel from a feed point;
a plurality of second antenna elements fed in series from any of the plurality of first antenna elements; and
a distributor that distributes feed power from the feed point to the plurality of first antenna elements in parallel according to a ratio of feed power to be fed to the pluralities of first and second antenna elements.

2. The antenna device according to claim 1, wherein
the plurality of first antenna elements and the plurality of second antenna elements are fed in phases different from each other.

3. The antenna device according to claim 2, wherein
the plurality of first antenna elements and the plurality of second antenna elements are fed in phases different from each other by 180 degrees.

4. The antenna device according to claim 1, wherein
the plurality of first antenna elements and the plurality of second antenna elements are fed in a same phase.

5. The antenna device according to claim 1, wherein
the plurality of second antenna elements includes an antenna element further fed in series to an antenna element fed in series from any of the plurality of first antenna elements.

6. The antenna device according to claim 1, wherein
the plurality of second antenna elements is arranged on an outside of the distributor with respect to the feed point.

7. The antenna device according to claim 1, wherein
the plurality of second antenna elements is arranged on an inside of the distributor with respect to the feed point.

8. The antenna device according to claim 1, wherein
the plurality of first antenna elements feeds power to the plurality of second antenna elements via a side where power is fed from the distributor.

9. The antenna device according to claim 1, wherein
the plurality of first antenna elements feeds power to the plurality of second antenna elements via a side facing a side where power is fed from the distributor.

10. The antenna device according to claim 1, wherein
the plurality of first antenna elements feeds power to the plurality of second antenna elements via a side orthogonal to a side where power is fed from the distributor.

11. The antenna device according to claim 1, wherein
the plurality of first antenna elements feeds power to the plurality of second antenna elements via electromagnetic field coupling.

12. The antenna device according to claim 1, wherein
the antenna device is an array antenna in which a plurality of linear antennas including the pluralities of first and second antenna elements and the distributor is arranged.

13. The antenna device according to claim 12, wherein
the plurality of linear antennas is arranged at a pitch equal to or less than half a wavelength of a corresponding frequency.

14. The antenna device according to claim 12, wherein
power is fed between the linear antennas at different feed power ratios.

15. The antenna device according to claim 1, wherein
the distributor is an unequal power divider that distributes feed power from the feed point by a feed line width according to the ratio of feed power to be fed to the pluralities of first and second antenna elements.

16. The antenna device according to claim 1, wherein
the distributor is a variable power divider that distributes feed power from the feed point by current control or voltage control according to the ratio of feed power to be fed to the pluralities of first and second antenna elements.

17. The antenna device according to claim 1, wherein
the distributor includes a power divider that distributes feed power from the feed point, and a variable attenuator that attenuates at least one portion of the feed power distributed by the power divider by current control or voltage control according to the ratio of feed power to be fed to the pluralities of first and second antenna elements.
